# EUROPÄISCHE PATENTANMELDUNG

(11) **EP 3 978 866 A1**
(43) Veröffentlichungstag der Anmeldung: **06.04.2022**
(21) Anmeldenummer: 21196490.3
(22) Anmeldetag: 14.09.2021
(51) Int. Cl.: G01B 11/00

(54) **VERFAHREN ZUM BESTIMMEN DER GEOMETRIE EINES OBJEKTES SOWIE OPTISCHE MESSVORRICHTUNG**

(30) Priorität: 01.10.2020 DE 102020125649
(71) Anmelder: WENZEL Metrology GmbH, 97859 Wiesthal (DE)
(72) Erfinder: Torner, François, 72336 Balingen (DE)
(74) Vertreter: Weidner Stern Jeschke

(57) **Zusammenfassung**

Bekannte Verfahren zum Bestimmen der Geometrie eines Objektes, insbesondere bei nicht beeinflussbaren Relativbewegungen, können nur ungenau messen. Zur Steigerung der Genauigkeit wird ein Verfahren zum Bestimmen der Geometrie eines Objektes in einer Messzone mittels einer optischen Messvorrichtung vorgeschlagen, wobei eine nicht beeinflussbare Relativbewegung zwischen der optischen Messvorrichtung und dem Objekt vorliegt und die optische Messvorrichtung ein Objektiv oder mehrere Objektive zur Aufnahme mehrerer Bilder des Objektes sowie eine Auswerteeinheit zum Auswerten der Bilder aufweist. Dabei wird ein Auswertebild mittels eines stochastischen Auswertens von Einzelbildinformationen jeweiliger Einzelbilder erzeugt, um die Geometrie genau bestimmen zu können.

## Beschreibung

Die Erfindung betrifft ein Verfahren zum Bestimmen der Geometrie eines Objektes in einer Messzone mittels einer optischen Messvorrichtung, wobei eine nicht beeinflussbare Relativbewegung zwischen der optischen Messvorrichtung und dem Objekt vorliegt. Weiterhin betrifft die Erfindung eine optische Messvorrichtung zum Bestimmen der Geometrie eines Objektes.

Bekannte optische Verfahren zum Bestimmen der Geometrie eines Objektes werden derart durchgeführt, dass Bilder oder Fotoaufnahmen eines Objektes mittels einer oder mehrerer Objektive angefertigt werden, wobei dann aus diesen Bildern oder Fotoaufnahmen mit verschiedenen Methoden auf die Geometrie oder die Topographie des Objektes geschlossen wird. Dazu werden verschiedene Verfahren der Bild- oder Fotoauswertung genutzt. Den bisher bekannten Verfahren zum Bestimmen der Geometrie eines Objektes auf diese Weise ist gemein, dass eine Messung in robuster Einsatzumgebung, wie zum Beispiel im industriellen Umfeld oder neben einer Großmaschine aufgrund von Vibrationen und/oder anderer negativer Einflüsse nicht möglich ist, da die eigentliche Messung durch diese Vibrationen beispielsweise überlagert oder verzerrt wird. Insbesondere bei der Bildauswertung ist dann keine klare Messung durchführbar. Damit ist die Bestimmung der Geometrie eines solchen Objektes in dieser Einsatzumgebung schwierig oder nur sehr ungenau möglich.

In der DE 10 2010 026 085 A1 ist ein Verfahren zum Überwachen wenigstens eines Zahnrades eines in Betrieb befindlichen Getriebes offenbart, bei dem Betriebsräder des Getriebes aufgenommen und bei Eignung als Referenz für eine Messserie zu einem mehrere einzelne Betriebsbilder zusammenfassenden Mitteilungsreferenzbildes weiterverarbeitet werden.

Ein Verfahren zum Ermitteln von Laserbearbeitungskenngrößen beim Laserbearbeiten eines Werkstückes mittels eines Laserstrahls in einem Bearbeitungsbereich wird in der DE 10 2012 216 928 A1 offenbart.

Die EP 3 564 618 A1 betrifft ein dreidimensionales Konturmesssystem und eine Zeitmessmethode.

Eine sichere Stereokamera und ein Verfahren zum Prüfen der Funktionsfähigkeit der Bildsensoren wird in der EP 3 651 458 A1 offenbart.

Aufgabe der Erfindung ist es, den Stand der Technik zu verbessern.

Gelöst wird die Aufgabe durch ein Verfahren zum Bestimmen der Geometrie eines Objektes in einer Messzone mittels einer optischen Messvorrichtung, wobei eine nicht beeinflussbare Relativbewegung zwischen der optischen Messvorrichtung und dem Objekt vorliegt und die optische Messvorrichtung ein Objektiv oder mehrere Objektive zur Aufnahme mehrerer Bilder des Objektes sowie eine Auswerteeinheit zum Auswerten der Bilder aufweist, wobei folgende Schritte durchgeführt werden:
- Positionieren des Objektives oder der Objektive in der Messzone relativ zum Objekt zum Bestimmen der Geometrie des Objektes,
- Aufnehmen mehrerer Einzelbilder des Objektes mittels der optischen Messvorrichtung, sodass mehrere Einzelbilder des Objektes aus der Messzone vorliegen,
- Erzeugen eines Auswertebildes mittels der Auswerteeinheit, wobei das Auswertebild mittels eines stochastischen Auswertens von Einzelbildinformationen der jeweiligen Einzelbilder derart erfolgt, dass das Auswertebild ein zeitlich gemitteltes Gesamtbild der Einzelbilder ist,
- Auswerten des Auswertebildes mittels der Auswerteeinheit, wobei aus dem Auswertebild ein Abbild der Geometrie des Objektes erzeugt wird,
- Ausgeben des Abbildes der Geometrie des Objektes,
sodass die Geometrie des Objektes mittels des Auswertebildes bestimmt ist.

Durch diese Vorgehensweise ist es möglich, eine genaue Messung zum Bestimmen der Geometrie eines Objektes auch in einer robusten Umgebung, beispielsweise bei nicht beeinflussbaren Vibrationen, durchzuführen. Dabei liegt die Genauigkeit der Geometriebestimmung durch die Verwendung stochastischer Methoden zur Auswertung deutlich höher, als es die Auswertung von Einzelbildern ermöglichen würde.

Folgende Begriffe seien an dieser Stelle erläutert:

Das "Bestimmen der Geometrie eines Objektes" kann jede Tätigkeit sein, die darauf abzielt, eine Geometrieinformation des Objektes abzuleiten oder zu erzeugen. Dies kann beispielsweise eine Größe, ein Längenmaß, aber auch die Information über die Oberflächenbeschaffenheit des Objektes, wie zum Beispiel dessen Topographie, sein. Dabei kann das Bestimmen der Geometrie sowohl global, also für die Gesamtheit des Objektes, als auch lokal, also für einen geometrischen Ausschnitt des Objektes, erfolgen.

Eine "Messzone" kann jeder Bereich am oder in der Nähe des Objektes sein, in dem das Bestimmen der Geometrie des Objektes durchgeführt werden soll. Beispielsweise kann dies eine Zone des Objektes sein, innerhalb derer die Oberflächenbeschaffenheit exakt bestimmt werden soll.

Eine "optische Messvorrichtung" ist beispielsweise eine stereoskopische oder mikroskopische oder anderweitig arbeitende optische Vorrichtung, mittels derer eine Messung vorgenommen werden kann. Insbesondere kann es sich dabei um ein Messmikroskop, eine stereoskopische Kamera, oder eine Messkamera handeln.

Eine "nicht beeinflussbare Relativbewegung" zwischen der optischen Messvorrichtung und dem Objekt kann jede, nicht bewusst oder technisch nachvollziehbar angeregte oder erzeugte Relativbewegung zwischen den genannten Objekten sein. Dabei kann es sich insbesondere um Vibrationen, beispielsweise in einer Industriehalle, handeln. Weiterhin kann es sich dabei um Schwingungen von beispielsweise Antriebsmotoren handeln oder auch um jede andere, fremdbestimmte Relativbewegung. Mithin handelt es sich um eine durch eine Apparatur "gegebene und/oder vorgegebene Relativbewegung".

Ein "Objektiv" kann jede optische Einrichtung sein, welche, beispielsweise mittels einer Vielzahl von Linsen und/oder Spiegeln, Licht aufnehmen, lenken, weiterleiten und in Richtung einer Bildaufnahmeeinheit lenken kann. Mittels eines solchen Objektivs oder mehrerer Objektive kann somit ein Bild oder mehrere Bilder eines Objektes aufgenommen werden. Beispielsweise handelt es sich bei einem solchen Objektiv um einen Teil einer Digitalkamera, eines Digitalmikroskops oder einer anderen gleichwirkenden Einrichtung.

Eine "Auswerteeinheit" zum Auswerten der Bilder ist beispielsweise ein Computer, ein Mikrochip oder eine andere geeignete Einrichtung, mittels derer eine Bildinformation aus einem Bild oder mehreren Bildern extrahiert und/oder ausgewertet werden kann. Im einfachsten Fall kann eine solche Auswerteeinheit auch eine Einrichtung zum Unterstützen einer manuellen Auswertung durch einen Menschen sein.

Ein "Auswertebild" kann jedes mittels der Auswerteeinheit erzeugte Bild oder jede gleichartige Information über das Bild oder Eigenschaften des Bildes sein. Dabei ist jeder Art von Auswertebild gemein, dass dieses Auswertebild mittels eines stochastischen Auswertens von Einzelbildinformationen jeweiliger Einzelbilder erzeugt wird. Damit enthält das Auswertebild genauere Informationen über die Geometrie des Objektes, als dies die beispielsweise unter Schwingung erzeugten Einzelbilder enthalten können.

"Stochastische Methoden" können all jene mathematischen Handlungen, Abläufe oder Methoden sein, die Wahrscheinlichkeiten und/oder Statistik nutzen, um eine Vorhersage oder Annahme für einen Vorhersagewert einer Messgesamtheit zu treffen. Insbesondere kann dies eine statistische Auswertung von mehreren Messwerten oder im vorliegenden Fall mehreren Bildern oder Einzelbildern sein. Dazu kann auch gehören, ein von den Messwerten abgeleitete statistische Größe für die Vorhersage oder Annahme einer Vorhersagewertes zu nutzen.

In einer Ausführungsform wird das stochastische Auswerten mittels einer Mittelwertbildung oder gewichteten Mittelwertbildung durchgeführt.

Eine solche Mittelwertbildung oder gewichtete Mittelwertbildung stellt eine relativ einfache und dennoch genaue stochastische Methode dar. Damit kann sichergestellt werden, dass die Information über die Geometrie des Objektes innerhalb des Auswertebildes zwischen den durch beispielsweise Schwingungen erzeugten Extremwerten liegt, und somit eine deutlich genauere Bestimmung der Geometrie des Objektes ermöglicht wird.

Um das Auswerten mit einem Computer oder anderen elektronischen Mitteln zu vereinfachen und die Genauigkeit zu erhöhen, wird das stochastische Auswerten für einander zugeordnete Bildpunkte und/oder Bildbereiche verschiedener Einzelbilder durchgeführt.

In einer Ausführungsform wird die Position der Messvorrichtung relativ zum Objekt innerhalb der Messzone mittels eines Aktuators verändert.

Mittels einer solchen Veränderung der Position der Messvorrichtung relativ zum Objekt können Messverfahren, welche beispielsweise die Fokussierung oder das Finden eines Fokuspunktes im Auswertebild oder in den Einzelbildern zur Grundlage haben, angewendet werden.

Um die Genauigkeit des Verfahrens weiter zu steigern, wird die Messvorrichtung mittels des Aktuators an einer Mehrzahl von Messstellen innerhalb der Messzone während einer Messung positioniert. Weiterhin kann dabei auch die exakte Position oder eine genaue Position des Aktuators innerhalb der Messzone bestimmt werden, sodass ein Rückschluss zwischen der gemessenen Position und eines entsprechenden Messwertes an der jeweiligen Messstelle ermöglicht wird.

In einer Ausführungsform wird das Auswerten anhand eines Ersatzsignals durchgeführt, wobei das Ersatzsignal eine ortsabhängige Schwankung eines Messsignals der Einzelbilder abbildet.

Beispielsweise ergibt sich für eine solche Ausführung im Bereich der bildgebenden Weißlichtinterferometrie folgendes: Bei der praktischen Umsetzung wird ein Bilderstapel mithilfe einer begrenzten Anzahl an Messbildern aufgenommen. Die Gesamtanzahl der Messbilder ergibt sich aus der Summe der der Einzelmessbilder an jeder Messposition. Die Anzahl der Einzelmessbilder pro Sensorposition kann dabei variieren. Aufgrund der Vibration des Sensors während der bildgebenden Datenerfassung schwanken die Intensitätswerte von Bild zu Bild trotz des vermeintlichen Stillstands des Sensors an jeder Messposition. Diese Schwankung bezieht sich dabei auf ein und denselben Bildpunkt innerhalb des Stapelverlaufs. Die Signalstärke und entsprechend auch die Schwankung sind umso stärker, je geringer die optische Weglängendifferenz ist. Bei der Weißlichtinterferometrie resultiert diese Schwankung aus der veränderlichen Abtastung des sogenannten Korrelogramms, welches sich in Form eines kontinuierlichen Verlaufs lokaler Intensitätsmaxima und Intensitätsminima ergibt. Diese Abtastung wird, je nach verwendetem Sensorchip, durch digitale Grau- oder Farbwerte charakterisiert. Entsprechend wird die Schwankung des Intensitätssignals je Messposition mithilfe der empirischen Standardabweichung oder einer ähnlichen Funktion abgebildet.

Ein "Ersatzsignal" kann dabei beispielsweise der Verlauf der empirischen Standardabweichung in Abhängigkeit der Messposition sein, das Ersatzsignal kann dann zum Beispiel mithilfe einer gewichteten Mittelwertbildung zur Auswertung der Höheninformation genutzt werden. Die Gewichtung bezieht sich dabei auf die Höhenwerte der Einzelmesspositionen, die entsprechend verrechnet werden. Die Höhenwerte können dabei von Bild zu Bild variieren und werden, je nach Auswerteverfahren, als veränderlich oder vermeintlich konstant angesehen. Durch diesen Schritt kann mittels des Ersatzsignals genauer auf ortsabhängige Schwankungen geschlossen werden. Damit ist eine zusätzliche Erhöhung der Genauigkeit des Verfahrens möglich.

Um robuste Verfahren zum Auswerten des Auswertebildes verwenden zu können, wird das Aufnehmen und/oder Auswerten mittels Interferometrie, anhand eines Hell-Dunkel-Kontrastes, anhand eines Intensitätswertes, anhand eines Farbwertes und/oder anhand eines Spektralwertverlaufes durchgeführt.

In weiteren Ausführungsformen wird das Aufnehmen der Einzelbilder aus verschiedenen Perspektiven vorgenommen. So kann beispielsweise mittels zweiter Objektive ein stereoskopisches Bild in der Messzone aufgenommen werden, welches dann mit entsprechenden Methoden der Bildauswertung ausgewertet werden kann. Somit kann beispielsweise ein Rückschluss auf die Topographie der Oberfläche eines Objektes gezogen werden.

Weiterhin ist die Verwendung unterschiedlicher Messprinzipien anwendbar. So ist das erfindungsgemäße Verfahren für die kohärente oder kurzkohärente Interferometrie, die Weißlichtinterferometrie (WLI) oder andere interferometrische Messprinzipien anwendbar. Als Messprinzipien können außerdem chromatische, chromatischkonfokale, schärfevariierte, auto-focussierende und/oder triangulationsbasierte Methoden verwendet werden.

Weiterhin kann das Aufnehmen der Einzelbilder unterstützt sein durch eine Beleuchtungseinheit oder ein Beleuchtungsmittel für das Erzeugen von Licht, Mustern oder anderen Informationsträger. So ist das erfindungsgemäße Verfahren auch mit strukturiert beleuchtetem Objekt oder spreckle-basiert, also unter Verwendung eines Punkt- oder Fleckmusters auf dem Objekt und entsprechender Bildauswertung umsetzbar.

Weitere Verfahren beziehen sich auf das Extrahieren von Informationen aus Messbildern, die nicht notwendiger Weise eine Topographie oder eine Geometrie als Endergebnis darstellen. So sind auch Verfahren realisierbar, die beispielsweise der Bildverarbeitung, der Extrahierung oder der Bildsegmentierung dienen. Gleiches gilt für Verfahren, die nicht notwendiger Weise auf flächigen Bilddaten beruhen, sondern einen skalaren Verlauf charakterisieren. Anwendungen aus der optischen 2D- und 3D-Streulichtmesstechnik sind ebenso realisierbar.

In einem weiteren Aspekt wird die Aufgabe gelöst durch eine optische Messvorrichtung zum Bestimmen der Geometrie eines Objektes in einer Messzone, wobei eine nicht beeinflussbare Relativbewegung zwischen der Messvorrichtung und dem Objekt vorliegt und die optische Messvorrichtung ein Objektiv oder mehrere Objektive zur Aufnahme mehrerer Bilder des Objektes, sowie eine Auswerteeinheit zum Auswerten der Bilder aufweist und wobei die optische Messvorrichtung derart eingerichtet ist, sodass ein Verfahren wie vorig beschrieben durchführbar ist.

Eine solche optische Messvorrichtung weist alle Vorteile des oben genannten Verfahrens auf.

In einer Ausführungsform weist die optische Messvorrichtung eine 3-achsige Koordinatenmessmaschine oder einen Roboter zum Bewegen der Messvorrichtung auf. Mittels einer solchen 3-achsigen Koordinatenmessmaschine oder einem Roboter kann die optische Messvorrichtung in einem industriellen Umfeld besonders einfach integriert werden. Weiterhin sind solche Maschinen oder Roboter industriell relativ günstig verfügbar.

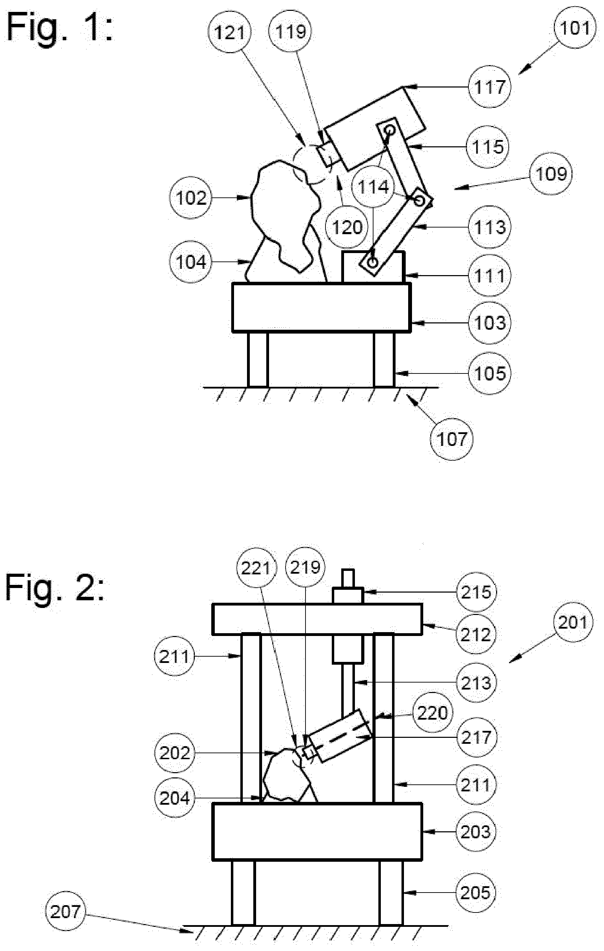

Im Weiteren wird die Erfindung anhand von Ausführungsbeispielen näher erläutert. Es zeigen
- Figur 1: eine schematische Darstellung einer optischen Messvorrichtung mit einem Roboterarm, sowie
- Figur 2: eine schematische Darstellung einer optischen Messvorrichtung in einer 3-Achs Koordinatenmessmaschine, sowie

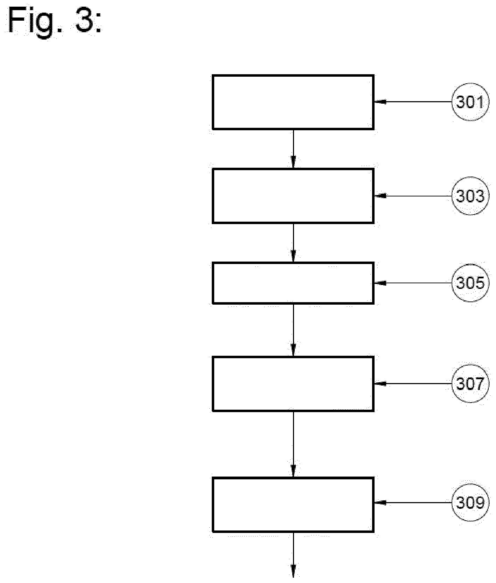

- Figur 3: ein Ablaufschema für ein Verfahren zur Bestimmung der Geometrie eines Objektes.

Eine Messanordnung 101 besteht aus einem Messtisch 103, welcher auf Füßen 105 ruht. Weiterhin umfasst die Messanordnung 101 ein Messgerät 109. Auf dem Messtisch 103 ruht auf einer Stütze 104 ein Maschinenteil 102. Die Stütze 104 ist dabei so beschaffen, dass das Maschinenteil 102 fest und sicher auf dem Messtisch 103 gehalten wird, um dessen Geometrie in einer Messzone 121 bestimmen zu können.

Der Messtisch 103 mit seinen Füßen 105 steht auf einem Boden 107 in einer Maschinenhalle. Dadurch sind der Messtisch 103 sowie die vollständige Messanordnung 101 den Vibrationen der in der Maschinenhalle befindlichen Maschinen ausgesetzt.

Der Messroboter 109 umfasst einen Sockel 111, einen Arm 113, einen Arm 115 sowie eine CCD-Messkamera 117. In einer Alternative kann auch eine CMOS-Messkamera verwendet werden. Die Arme 113 sowie 115 sind sowohl mit dem Sockel 111 als auch mit der CCD-Messkamera 117 jeweils mit Gelenken 114 (schematisch dargestellt) verbunden. Die gesamte Anordnung des Messroboters 109 ist damit als Messroboter mit Knickarmen für die freie Bewegung im Raum ausgeführt.

Die CCD-Messkamera 117 weist ein Objektiv 119 auf, welches an einer Stirnseite 120 angeordnet ist. Weiterhin ist in der CCD-Messkamera 117 ein Computerchip zur Verarbeitung einer aufgenommenen Bildinformation angeordnet.

Am Objektiv ist eine Beleuchtungseinheit angeordnet (nicht dargestellt), welche die Messzone 121 beleuchtet. Die Messzone 121 ist dabei jener Bereich des Maschinenteils 102, in welchem die Geometrie des Maschinenteils 102 gemessen oder dessen Oberflächentopografie bestimmt werden soll.

Innerhalb der CCD-Messkamera 117 ist weiterhin eine Achsführung angeordnet, mittels derer das Objektiv 119 gegenüber der Messzone 121 und/oder gegenüber dem Maschinenteil 102 senkrecht zur Stirnseite 120 verschoben werden kann. Diese Verschiebung kann mittels eines Glasmessstabes (nicht dargestellt) aufgenommen werden. In einer Alternative kann auch jede andere Form von Maßverkörperung verwendet werden. Damit ist die Bestimmung der Relativposition des Objektives 119 um Maschinenteil 102 genau möglich.

Soll nun die Geometrie des Maschinenteils 102 innerhalb der Messzone 121 bestimmt werden, so wird der Messroboter 109 mittels der Arme 113 und 115 derart bewegt, dass die CCD-Messkamera 117 in einer Ausrichtung zur Messzone 121 und zum Maschinenteil 102 positioniert wird, in der gemessen werden soll. Zum Messen wird das Objektiv 119 mittels der im der CCD-Messkamera 117 befindlichen Achsführung vor- und zurückverschoben und die Relativposition mittels dem Glasmessstab ermittelt. Damit wird eine Serie von Bildern mittels des Objektivs 119 aufgenommen. Der Messvorgang wird dann durch eine Bildauswertung innerhalb des Computerchips in der CCD-Messkamera 117, in diesem Beispiel durch eine Auswertung der Schärfevariation der Bilder, abgeschlossen.

Durch die Anordnung des Messtisches 103 auf dem Boden 107 innerhalb der Maschinenhalle kommt es jedoch beim Messvorgang zu unerwünschten Schwingungen. Das Objektiv 119 zeichnet deshalb an jedem Punkt oder an jeder Position innerhalb der Messzone 121 beim Durchfahren des Messbereiches mittels der Achsführung mehrere Bilder auf, welche durch die Schwingungen induziert relativ zum Maschinenteil 102 aus unterschiedlichen Positionen um eine Mittellage der Schwingungen herum aufgenommen werden.

Innerhalb der CCD-Messkamera 117 ist dazu der Computerchip (nicht gezeigt) vorhanden, innerhalb welchem aus diesen, durch die Schwingungen unterschiedlichen, Bildern durch Auswertung der Standardabweichung der Messsignale ein um den Anteil der Schwingungen größtenteils bereinigtes Auswertebild erzeugt wird. Aus diesem Auswertebild wird dann mittels einer Auswertung der Schärfevariation des Auswertebildes die Geometrie des Maschinenteils 102 in der Messzone 121 bestimmt. Durch das gewählte Auswerteverfahren ist diese Geometrie des Maschinenteils 102 in der Messzone 121 deutlich genauer festgestellt, als dies beispielsweise durch Auswerten der Einzelbilder erfolgen könnte.

Eine Messmaschine 201 ist mit dem Bewegungsapparat einer 3-Achs-Koordinatenmessmaschine mit einer zusätzlichen optischen Messeinrichtung ausgeführt. Die Messmaschine 201 weist einen Messtisch 203 mit Füßen 205 auf. Auf dem Messtisch 203 ist mit einer Stütze 204 ein Gussbauteil (nur schematisch dargestellt) 202 angeordnet. Die Stütze 204 hält das Gussbauteil 202 dabei fest in seiner Position auf dem Messtisch 203.

Fest auf dem Messtisch 203 ist zudem die 3-Achs-Koordinatenmessmaschine angeordnet. Diese weist Säulen 211 auf, welche eine Traverse 212 tragen. An der Traverse 212 ist mittels eines Achsknoten 215 eine weitere Traverse 213 angeordnet. Die Säulen 211, die Traverse 212 sowie die Traverse 213 sind rechtwinklig zueinander angeordnet. An der Traverse 213 ist wiederum eine Stereo-Kamera 217 mit einem Objektivsatz 219, bestehend aus zwei Objektiven einer stereoskopischen Anordnung, befestigt. Weiterhin ist eine Beleuchtungseinheit (nicht dargestellt) zur Beleuchtung einer Messzone 221 des Gussbauteils 202 am Objektivsatz 219 vorhanden, mittels derer ein definiertes Streifenbild auf das Gussbauteil 202 projiziert werden kann.

Mittels der Traverse 212, dem Achsknoten 215 sowie der Traverse 213 wird die Stereo-Kamera 217 in drei Achsen im Raum bewegt. Die Traversen 212 sowie 213 sind dabei jeweils in einer Raumachse relativ zur Messmaschine 201 beweglich. Die Traverse 212 ist dabei auf den Säulen 211 in eine Portalanordnung verschiebbar, so dass insgesamt alle drei Raumachsen separat voneinander bewegt werden können.

Innerhalb der Stereo-Kamera 217 ist eine Anordnung umgesetzt, mittels derer der Objektivsatz 219 relativ zu einer Längsachse 220 der Stereo-Kamera 217 bewegt werden kann. Damit kann das Objektiv 219 innerhalb der Messzone 221 bewegt werden.

Innerhalb der Messzone 221 kann mittels der Messmaschine 201 damit die Geometrie oder die Topographie des Gussbauteils 202 bestimmt werden.

Für eine solche Bestimmung oder Messung des Gussbauteils 202 wird die Stereo-Kamera 217 in der Messzone 221 positioniert. Dann erfolgt eine Aufnahme von Bildern der Oberfläche des Gussbauteils 202 mittels des Objektivsatzes 219 und der Stereo-Kamera 217. Dabei werden die Streifenmuster, welche durch die Beleuchtungseinheit auf dem Körper 202 projiziert werden, aufgenommen. Steht nun die Messmaschine 201 in der Nähe eines schwingungsbehafteten Anlagenteils oder einer schwingungsbehafteten Umgebung, so entsteht auch eine Relativbewegung zwischen Stereo-Kamera 217 und dem Gussbauteil 202, welche die Messung negativ beeinflusst.

Zur Steigerung der Genauigkeit der Messung werden nun mittels des Objektivsatzes 219 und der Stereo-Kamera 217 für jeden Messpunkt zwölf Bilder in der Messzone 221 vom Gussbauteil 202 angefertigt. In der Stereo-Kamera 217 ist weiterhin ein Computerchip (nicht gezeigt) als Auswerteeinheit vorgesehen, welcher aus dieser Anzahl von jeweils zwölf Bildern durch eine gewichtete Mittelwertbildung für jeweilige Messpunkte ein Auswertebild generiert, anhand dessen die Geometrie des Gussbauteils 202 in der Messzone 211 bestimmt wird. Mittels der Auswerteeinheit ist somit eine deutlich höhere Genauigkeit der Messung innerhalb der Messzone 221, als dies bei Auswertung der jeweiligen Einzelbilder möglich wäre.

Im Folgenden sei ein Verfahren zum Bestimmen der Geometrie eines objektes mittels einer optischen Messvorrichtung beschrieben.

Anfänglich erfolgt das Positionieren eines optischen Messsystems 301. Sodann erfolgt das Aufnehmen mehrerer Einzelbilder 303. Nach diesem Schritt wird das Erzeugen 305 eines Auswertebildes durchgeführt. Weiterhin wird das Auswerten des Auswertebildes 307 durchgeführt. Abschließend wird das Ausgeben eines Abbildes einer Geometrie 309 durchgeführt.

### Bezugszeichenliste

- 101: Messanordnung
- 102: Maschinenteil
- 103: Messtisch
- 104: Stütze
- 105: Fuß
- 107: Boden
- 109: Messroboter
- 111: Sockel
- 113: Arm
- 114: Gelenk
- 115: Arm
- 117: CCD-Messkamera
- 119: Objektiv
- 120: Stirnseite
- 121: Messzone
- 201: Messmaschine
- 202: Gussbauteil
- 203: Messtisch
- 204: Stütze
- 205: Fuß
- 207: Boden
- 211: Säule
- 212: Traverse
- 213: Traverse
- 215: Achsknoten
- 217: Stereo-Kamera
- 219: Objektivsatz
- 220: Längsachse
- 221: Messzone
- 301: Positionieren eines optischen Messsystems
- 303: Aufnehmen mehrerer Einzelbilder
- 305: Erzeugen eines Auswertebildes
- 307: Auswerten des Auswertebildes
- 309: Ausgeben eines Abbildes einer Geometrie

## Patentansprüche

1. Verfahren zum Bestimmen der Geometrie eines Objektes (102, 202) in einer Messzone (121, 221) mittels einer optischen Messvorrichtung (101, 201), wobei eine nicht beeinflussbare Relativbewegung zwischen der optischen Messvorrichtung (101, 201) und dem Objekt (102, 202) vorliegt und die optische Messvorrichtung (101, 201) ein Objektiv (119, 219) oder mehrere Objektive (219) zur Aufnahme mehrerer Bilder des Objektes (102, 202) sowie eine Auswerteeinheit zum Auswerten der Bilder aufweist **gekennzeichnet durch** folgende Schritte:
- Positionieren des Objektives (119, 219) oder der Objektive (219) in der Messzone (121, 221) zum Bestimmen der Geometrie des Objektes (102, 202),
- Aufnehmen mehrerer Einzelbilder des Objektes (102, 202) mittels der optischen Messvorrichtung (101, 201), so dass mehrerer Einzelbilder des Objektes (102, 202) aus der Messzone vorliegen,
- Erzeugen eines Auswertebildes mittles der Auswerteeinheit, wobei das Auswertebild mittels eines stochastischen Auswertens von Einzelbildinformationen der jeweiligen Einzelbilder derart erfolgt, dass das Auswertebild ein zeitlich gemitteltes Gesamtbild der Einzelbilder ist,
- Auswerten des Auswertebildes mittels der Auswerteeinheit, wobei aus dem Auswertebild ein Abbild der Geometrie des Objektes (102, 202) erzeugt wird,
- Ausgeben des Abbildes der Geometrie des Objektes (102, 202),
so dass die Geometrie des Objektes mittels des Auswertebildes bestimmt ist.

2. Verfahren gemäß Anspruch 1, **dadurch gekennzeichnet, dass** das stochastische Auswerten mittels einer Mittelwertbildung oder einer gewichteten Mittelwertbildung durchgeführt wird.

3. Verfahren gemäß Anspruch 1 oder 2, **dadurch gekennzeichnet, dass** das stochastische Auswerten für einander zugeordnete Bildpunkte und/oder Bildbereiche verschiedener Einzelbilder durchgeführt wird.

4. Verfahren gemäß einem der vorherigen Ansprüche, **dadurch gekennzeichnet, dass** die Position der Messvorrichtung relativ zum Objekt (102, 202) innerhalb der Messzone (121, 221) mittels eines Aktuators verändert wird.

5. Verfahren nach Anspruch 4, **dadurch gekennzeichnet, dass** die Messvorrichtung (117, 217) mittels des Aktuators an einer Mehrzahl von Messstellen innerhalb der Messzone während einer Messung positioniert wird.

6. Verfahren gemäß einem der vorherigen Ansprüche, **dadurch gekennzeichnet, dass** das Auswerten anhand eines Ersatzsignals durchgeführt wird, wobei das Ersatzsignal eine ortsabhängige Schwankung eines Messsignals der Einzelbilder abbildet.

7. Verfahren gemäß einem der vorherigen Ansprüche, **dadurch gekennzeichnet, dass** das Aufnehmen und/oder Auswerten mittels Interferometrie, anhand eines Hell-Dunkel-Kontrastes, anhand eines Intensitätswertes, anhand eines Farbewertes und/oder anhand eines Spektralwertverlaufes durchgeführt wird.

8. Optische Messvorrichtung (117, 217) zum Bestimmen der Geometrie eines Objektes (102, 202) in einer Messzone (121, 221), wobei eine nicht beeinflussbare Relativbewegung zwischen der Messvorrichtung (117, 217) und dem Objekt (102, 202) vorliegt und die optische Messvorrichtung (117, 217) ein Objektiv (119, 219) oder mehrere Objektive (219) zur Aufnahme mehrerer Bilder des Objektes (102, 202), sowie eine Auswerteeinheit zum Auswerten der Bilder aufweist und wobei die optische Messvorrichtung (117, 217) **derart eingerichtet ist, dass** ein Verfahren gemäß Anspruch 1 bis 7 durchführbar ist.

9. Optische Messvorrichtung gemäß Anspruch 8, **gekennzeichnet durch** eine 3-achsige Koordinatenmessmaschine (201) oder einen Roboter (109) zum Bewegen der Messvorrichtung (117, 217) .
